(19) Europäisches Patentamt
European Patent Office
Office européen des brevets

(11) EP 0 643 987 B1

(12) **EUROPEAN PATENT SPECIFICATION**

(45) Date of publication and mention of the grant of the patent:
**14.01.1998 Bulletin 1998/03**

(51) Int. Cl.[6]: **B01D 53/50**, B01D 53/84

(21) Application number: **94305046.8**

(22) Date of filing: **08.07.1994**

# (54) Bioregenerative flue gas desulphurization

Rauchgasentschwefelung mit biologischer Regenerierung

Désulfuration de gaz de fumée à régénération biologique

(84) Designated Contracting States:
**DE ES GB IT**

(30) Priority: **20.09.1993 US 124324**

(43) Date of publication of application:
**22.03.1995 Bulletin 1995/12**

(73) Proprietor:
**THE BABCOCK & WILCOX COMPANY**
**New Orleans, Louisiana 70160-0035 (US)**

(72) Inventors:
- **Johnson, Dennis Wayne**
  **Barberton, Ohio 44203 (US)**
- **Bhat, Pervaje Ananda**
  **North Canton, Ohio 44720 (US)**
- **Murphy, David William**
  **Akron, Ohio 44312 (US)**
- **Myers, Robert Bruce**
  **Copley, Ohio 44321 (US)**

(74) Representative:
**Pilch, Adam John Michael et al**
**D. YOUNG & CO.,**
**21 New Fetter Lane**
**London EC4A 1DA (GB)**

(56) References cited:
**EP-A- 0 326 457**
**EP-A- 0 451 922**
**WO-A-92/10270**
**WO-A-93/18800**
**DE-A- 3 621 333**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.15.8/3.4

## Description

The present invention relates in general to systems and methods for flue gas desulphurization (FGD) and, in particular, to such systems and methods using a regenerative reagent produced by biological means.

The combustion of fossil fuels such as coal or oil commonly produces flue gas that contains sulphur based compounds such as sulphur dioxide ($SO_2$), sulphur trioxide ($SO_3$) and other contaminants. A number of methods or systems are used to remove or decrease the sulphur content of the flue gas. Many of these systems or processes involve the use of a regenerated reagent to desulphurize the flue gas. Regenerable reagent processes for the desulphurization of flue gas include sodium based systems and processes such as the Wellman-Lord process, the Citrate process, Amine-based processes, and the MgO process.

Wet regenerable FGD processes generally include an absorption step in which fresh or regenerated reagent is reacted with $SO_2$ in a scrubber to clean and desulphurize the flue gas. The $SO_2$ absorption reaction produces products which are sent to a regeneration system which generally requires the addition of heat in order to produce an $SO_2$ rich gas. This $SO_2$ rich gas is then further treated to produce sulphur, sulphuric acid, or liquid $SO_2$. The reagent used during the absorption process is then regenerated for further use in the $SO_2$ absorption process. The reactions involved in the $SO_2$ absorption and stripping processes are very complex. Because of their complexity, these reactions require a great amount of energy to proceed to completion.

Figure 1 of the accompanying drawings is a simplified schematic diagram of a known regenerable wet flue gas desulphurization system 10 which employs the Wellman-Lord process. As shown therein, flue gas 12 from a boiler or combustor 14 is provided to a prescrubber 16 to remove flyash and chlorides. The flyash is collected in a water slurry 18 that is transported to a settling pond 20 before discharge. Prescrubbed flue gas 22 is directed to an absorber 24 for removal of sulphur dioxide ($SO_2$). A sodium sulphite ($Na_2SO_3$) solution 26 is provided from a make up tank 28 to the absorber 24 for this purpose. Cleaned, saturated flue gas 30 leaves the absorber 24 and is sent to a reheater 32 prior to discharge into the atmosphere via a stack 34. Steam 36 may be used to accomplish this reheating step. In the absorber 24, the sodium sulphite is converted to sodium bisulphite ($NaHSO_3$) 38 which is sent to a regenerator 40. As necessary, a small portion of the sodium bisulphite 38 is purged to the regenerator 40 to control production of sulphate at 42. The regenerator 40 includes an evaporator crystallizer. The $SO_2$ vapour is removed at 44 from the regenerator 40 for sulphur recovery. A regenerated solution 46 consisting of sodium sulphite is taken from the regenerator 40 and enters the make up tank 28 where sodium carbonate/sodium hydroxide ($Na_2CO_3$/NaOH) is added by a stream 48.

Figure 2 is a simplified schematic diagram of another known wet regenerable flue gas desulphurization system 50 which employs the MgO wet scrubbing process. The simplified reactions in an MgO scrubber are as follows:

$$Mg(OH_2) + SO_{2(g)} \rightarrow MgSO_3 + H_2O$$

(absorption)

$$\left.\begin{array}{l} MgSO_3 + HEAT \rightarrow MgO_{(s)} + SO_{2(g)} \\ MgO_{(s)} + H_2O \rightarrow Mg(OH)_2 \end{array}\right\} \text{(regeneration)}$$

As shown in Figure 2, flue gas 12 and water 52 are provided to a quencher 54. After the flue gas 12 and the water 52 react in the quencher 54, the cooled flue gas 56 is provided to a scrubber 58 which also receives an $Mg(OH)_2$ slurry 60 provided by a slaker 62. The scrubber 58 produces a solution 64 of $MgSO_3$, $MgSO_4$, and water, $H_2O$. Some of the solution 64 is recirculated along with the $Mg(OH)_2$ slurry 60 and the rest is provided to a dewatering means 66. MgO 68 is provided to the slaker 62 partly recycled from a calciner 70 to produce the $Mg(OH)_2$ slurry 60. Water 52 is mixed with a solution 72 from the dewatering means 66 to form a solution 74 which is provided to the slaker 62. A by-product solution 76 from the dewatering means 66 is provided to a dryer 78 along with fuel 80 to dry the solution 76. In turn, the now dry material 82 is provided to the calciner 70 along with fuel 80 to produce the MgO 68. The $SO_2$ 84 generated from the calciner 70 is provided to an acid plant 86 to produce $H_2SO_4$ 88. Cleaned, desulphurized flue gas leaves the scrubber 58 at 90.

Another process for the absorption of $SO_2$ is a dual-alkali flue gas desulphurization process in which one reagent, generally sodium carbonate/sodium sulphite ($Na_2CO_3$/$NaSO_3$), is used to absorb the $SO_2$. The product of this reaction, sodium bisulphite ($NaHSO_3$), is then reacted with lime or limestone in order to form calcium sulphite ($CaSO_3$) and calcium sulphate ($CaSO_4$) so that the reagent can be regenerated. Shown in Figure 3 is a simplified schematic diagram of such a known wet regenerable flue gas desulphurization system 100 which employs a dual-alkali (limestone) process. Flue gas 12 is provided to a precipitator 102 for removal of flyash 104 from the flue gas 12. The cleaned flue gas 106

from the precipitator 102 enters an absorber 108 for producing a cleaned and desulphurized flue gas 110 which is provided to a stack 34. The absorber 108 receives a sodium sulphite solution 112 which is used as the reagent to remove the $SO_2$ from the flue gas 106. In the absorber 108, a sodium bisulphite ($NaHSO_3$) solution 114 is created during $SO_2$ absorption, and this solution 114 is sent to a reaction tank 116 where it is mixed with a limestone slurry 118. The reaction tank 116 comprises the regeneration portion of this known dual-alkali (limestone) flue gas desulphurization system. Crushed limestone 120 is mixed with water 52 in a ball mill 122 to produce the limestone slurry 118. The limestone slurry 118 is stored in a limestone slurry tank 124 for use as required by the process. Soda ash 126 is provided along with water 52 to a surge tank 128. A thickener 130 is used to thicken a suspended solid product or sludge 132 from the reaction tank 116. This thickened product 134 is, in turn, provided to the filter 136. The recovered water 131 overflows from the thickener 130 into the surge tank 128, where it is mixed with soda ash 126, and is used as make-up for soda losses and water to produce sodium sulphite solution 112. The thickened product 134 is then provided to a filter 136 along with water 52 used to wash the thickened product 134. Fly ash 104 from the precipitator 102 is combined with lime 138 and the washed, thickened product from the filter 136 in a mixer 140, and the entire mixture is eventually disposed of in a land-fill 142. Indeed, a common problem in all dual-alkali processes is that a sludge is produced as a byproduct of this reaction that must be either land-filled or converted into a useful form.

Additionally, non-regenerated flue gas desulphurization systems that are calcium based have been used for desulphurization purposes. In these systems, lime or limestone or another reagent is also reacted with $SO_2$. The end product of this reaction is also a sludge similar to the sludge produced by the dual-alkali systems which must be disposed or converted into a useful form.

Figure 4 is a simplified schematic diagram of such a typical flue gas desulphurization system 150, specifically a non-regenerable throwaway system. Flue gas 12 is delivered to an absorber 152 to produce a clean flue gas 153 which is provided to a stack 34. Crushed limestone 154 and water 52 are provided to a ball mill 156 where the limestone 154 is finely ground to produce a limestone slurry 158. The limestone slurry 158 is stored for use as required, in a storage tank 160. The limestone slurry 158 is provided to the absorber 152 where it reacts with the $SO_2$ in the flue gas 12 to produce a slurry 162 of primarily calcium sulphite ($CaSO_3$) and calcium sulphate ($CaSO_4$). This slurry 162 is recirculated back to an upper portion of the absorber 152 by a pump 164 to further promote $SO_2$ absorption. A portion of the slurry 162 is also sent to a pond 166 for disposal. Other alternatives exist for sludge processing and disposal. Water 168 can be returned from the pond 166 and mixed in a blend station 170 with fresh water 52 and used in the absorber 152 as make-up water.

Naturally occurring sulphur-reducing bacteria are known to exist. These bacteria are known to oxidize organics to acetic acids which, in turn, produce $H_2S$ through metabolic reduction from scrubber sludge. One known reaction (others are possible) is as follows:

$$CH_3COOH + SO_4^{2-} (SO_3^{2-}) \rightarrow H_2S + 2HCO_3^-$$

The above acetic acid reaction with a sulphite or sulphate salt, however, is generally considered unfavourable in known FGD systems because of the toxic nature and odour associated with the $H_2S$. Because of this reaction, some FGD systems use biocides in order to control $H_2S$ emissions. Sulphur-reducing bacteria have also been used to clean sulphur from the coal used in the combustion process. Extensive research has been done to develop economic coal cleaning processes to reduce sulphur in the coal prior to combustion.

In addition, sulphur-reducing bacteria (from either the *Desulfovibrio* genus or the *Desulfotomaculum* genus) have been identified in FGD sludge processing and storage areas.

European Patent Application No. EP-A-0 451 922 discloses a technique for removing sulphur dioxide from a flue gas in which the flue gas is passed through an alkaline aqueous solution so that the sulphur dioxide is dissolved as a sulphite. This sulphite-containing solution is subjected to sulphur-reducing bacteria in an anaerobic reactor such that the sulphite is reduced to sulphide. The solution is then subjected to sulphur-oxidizing bacteria and a measured quantity of oxygen to produce elemental sulphur.

European Patent Application No. EP-A-0 326 457 discloses a similar process, in this case involving formation of both sulphate and sulphite after contact with the waste gas. Sulphur-reducing bacteria convert the sulphate and sulphite to hydrogen sulphide which can then be oxidized to form sulphur.

According to an aspect of the invention there is provided a bioregenerative flue gas desulphurization method comprising:

providing flue gas, a reagent for reacting with the flue gas and water to an absorber means thereby causing an absorption of sulphur from the flue gas by the reagent;
providing spent reagent from the absorber means to a digester reactor containing sulphur-reducing bacteria for regenerating the reagent; and
providing the regenerated reagent to the absorber means for further reacting with the flue gas;

characterised in that the reagent is a calcium-based reagent, and by the further steps of:

separating the product produced in the digester reactor into regenerated reagent and organic solids; and
returning the organic solids to the digester reactor.

According to another aspect of the invention there is provided a bioregenerative flue gas desulphurization system comprising:

a flue gas source;
a reagent source;
a water source;
absorber means for receiving the flue gas, the reagent and the water to cause an absorption of sulphur from the flue gas by the reagent within said absorber means; and
a digester reactor for receiving spent reagent from the absorber means after the sulphur is absorbed from the flue gas by the reagent, the digester reactor containing sulphur-reducing bacteria for regenerating the reagent, the regenerated reagent being provided back into the absorber means for further reaction with the flue gas; and separator means are provided for separating the product produced in the digester reactor into regenerated reagent and organic solids;

characterised in that:

the reagent is a calcium-based reagent;

and

means are provided for returning the organic solids to the digester reactor.

A preferred embodiment of the present invention provides a method and system for desulphurization of flue gas using a regenerated reagent produced by sulphur-reducing bacteria. A nutrient source such as that commonly found in the organic waste sludge from municipal waste water treatment plants can be used when necessary in order to maximize bacterial growth.

The preferred embodiment uses an absorber for receiving flue gas, reagent and water for absorbing sulphur or $SO_2$ from the flue gas. Once the reagent is reacted with the flue gas in the absorber, the spent reagent is provided to a digester reactor. Sulphur-reducing bacteria contained within the digester reactor react with the spent reagent and regenerate it. Gases produced by the reactions in the digester reactor can be collected by a gas collector. $H_2S$ rich gas collected by the gas collector is provided to a final processor.

A nutrient source such as organic waste sludge from municipal waste water treatment plants can be used to maximize bacterial growth and thus $H_2S$ gas production and reagent regeneration.

A separator is used to separate the regenerated reagent from the organic solids bacterial sludge in the digester reactor. The sludge can then be provided to an organic sludge processor while the regenerated reagent is provided back into the absorber for further reaction with the flue gas.

Thus one aspect of the preferred embodiment of the present invention is the use of a waste stream such as sludge from a municipal waste water treatment plant to maximize bacterial growth and increase the rate of $H_2S$ formation and reagent regeneration.

The preferred method and system for desulphurizing flue gas is efficient and cost effective.

The invention will now be described by way of example with reference to the accompanying drawings, throughout which like parts are referred to by like references, and in which:

Figure 1 is a schematic diagram of a first known regenerative flue gas desulphurization system, employing the Wellman-Lord process;
Figure 2 is a schematic diagram of a second known regenerative flue gas desulphurization system, employing MgO wet scrubbing;
Figure 3 is a schematic diagram of a third known flue gas desulphurization system, employing dual-alkali (limestone) scrubbing;
Figure 4 is a schematic diagram of a fourth known non-regenerable (throwaway) flue gas desulphurization system; and
Figure 5 is a schematic diagram of a bioregenerative flue gas desulphurization system according to an embodiment of the present invention.

Figure 5 is a simplified schematic diagram of a bioregenerative flue gas desulphurization (FGD) system 200 according to an embodiment of the present invention. As shown therein, the bioregenerative FGD system 200 receives flue gas 12 produced during the combustion of fossil fuels such as oil or coal. or refuse fuels. The flue gas 12 is provided to an absorber tower or module 202 for $SO_2$ absorption, along with reagent 204 and water 52. The water 52 can be provided from a source 206. After $SO_2$ is absorbed from the flue gas 12 by the reagent 204, the spent reagent 208 is provided to a digester reactor 210. Sulphur-reducing bacteria in the digester reactor 210 cause the evolution of $H_2S$ from the spent reagent 208 which yields a product 212 containing both regenerated reagent and organic solids. Gases produced by reactions occurring within the digester 210 are collected in a gas collector 214. The gas collector 214 can be used to collect by-product $H_2S$-rich gas 216 which can be processed in a final processor 218.

A separator 220 is used to separate the product 212 produced by reactions occurring in the digester reactor 210 from the spent reagent 208. This separation process produces an organic solids sludge 222 and regenerated reagent 224. The sludge 222 separated by the separator 220 is provided to a sludge processor 226 and returned to the digester reactor 210. The regenerated reagent 224 separated from the sludge 222 in the separator 220 is provided back into the absorber 202 for further reaction with the flue gas 12.

A nutrient source 228 is provided as necessary to the digester reactor 210 to promote bacterial growth therein.

The system 200 thus provides a bioregenerative flue gas desulphurization process that utilizes sulphur-reducing bacteria as a reducing agent to regenerate the reagent 204 used to desulphurize the flue gas 12. Since the flue gas desulphurization process is calcium based, the bacteria are used to convert calcium/sulphur ($SO_4^{2-}$ or $SO_3^{2-}$) salts to calcium carbonate ($CaCO_3$) or calcium bicarbonate ($Ca(HCO_3)_2$) which can be physically separated from the organic solids sludge 222 as the regenerated reagent 224 for reuse in the system 200. The system also produces the by-product $H_2S$ gas 216 which can be burned in the processor 218 in order to form an $SO_2$-rich gas stream to produce $SO_2$, or reacted to produce sulphur through a Claus reaction. Additionally, sulphuric acid ($H_2SO_4$) can also be produced from this by-product $H_2S$ gas 216.

The system 200 provides for the promotion of bacterial growth by addition of the nutrient from the source 228 and by controlling environmental conditions such as temperature, pH and oxygen content, within the digester reactor 210. The optimum ranges of these parameters will depend upon the particular strain of sulphur-reducing bacteria used in the digester reactor 210. It is preferred that the sulphur-reducing bacteria be of the *Desulfovibrio* genus or the *Desulfotomaculum* genus. Suitable temperature sensing means 230, pH sensing means 232, and oxygen sensing means 234 are provided for this purpose, along with nutrient flow rate sensing means 236, nutrient flow control means 238 and valve means 240. The nutrient source 228 is preferably an organic waste sludge of the type which can be commonly found in municipal waste water treatment plants in order to maximize bacterial growth. By promoting bacterial growth and selecting the most suitable bacteria, the size of the digester reactor 210 can be optimized for any particular application.

The digester reactor 210 can be a single tank or plurality of tanks having a sufficient volume in order to allow the microbial reduction of the spent reagent 208 to occur. The reduction process occurring in the digester reactor 210 can be performed in either batch or continuous modes.

The gas collector 214 can comprise a fluid, chamber, lid or bladder which can trap any released gases, including $H_2S$, without significant mixing with ambient air. The digester reactor 210 and gas collector 214 may replace evaporators which are commonly found in previously-proposed systems for the regeneration of reagent. By eliminating the need for such evaporators, the need for steam stripping and calcinating steps and their associated equipment is eliminated, together with the great energy demand required by these steps. Great savings in power consumption can thus be achieved, savings which are not available in known regenerable systems.

Additionally, the present system provides for a substantial reduction in the make-up requirements for the reagent 204 used in the system 200. Effective elimination of reagent handling and preparation equipment can be achieved, except for small tanks and/or silos for the reagent 204. Thus substantial savings in capital equipment and operating costs may be achieved.

The present system replaces complicated and expensive equipment such as steam strippers, multi-stage evaporators, dryers and calciners through the use of compact tanks or vessels for biological sulphur reduction.

While a specific embodiment of the invention has been shown and described in detail to illustrate the application of the principles of the invention, it will be understood that the invention may be embodied otherwise without departing from such principles.

## Claims

**1.** A bioregenerative flue gas desulphurization method comprising:

providing flue gas (12), a reagent (204) for reacting with the flue gas (12) and water (52) to an absorber means (202) thereby causing an absorption of sulphur from the flue gas (12) by the reagent (204);
providing spent reagent (208) from the absorber means (202) to a digester reactor (210) containing sulphur-reducing bacteria for regenerating the reagent; and
providing the regenerated reagent (224) to the absorber means (202) for further reacting with the flue gas (12);
characterised in that the reagent (204) is a calcium-based reagent, and by the further steps of:

separating the product (212) produced in the digester reactor (210) into regenerated reagent (224) and organic solids (222); and
returning the organic solids (222) to the digester reactor (210).

**2.** A method according to claim 1, further comprising the step of providing a nutrient source (228) to the digester reactor (210) to promote growth of the sulphur-reducing bacteria therein.

**3.** A method according to claim 1 or claim 2, further comprising the step of collecting $H_2S$ gas (216) produced by regenerating the spent reagent (208) in the digester reactor (210).

**4.** A method according to claim 3, further comprising the step of processing said collected $H_2S$ gas (216) produced by regenerating the reagent (208) in the digester reactor (210) to form sulphur dioxide, sulphur, or sulphuric acid.

**5.** A method according to any one of the preceding claims, further comprising the step of controlling conditions such as temperature (230), pH (232), nutrient content (236) and/or oxygen content (234) within the digester reactor (210) to promote bacterial growth therein.

**6.** A method according to any one of the preceding claims, wherein the sulphur-reducing bacteria are from the *Desulfovibrio* genus or the *Desulfotomaculum* genus.

**7.** A bioregenerative flue gas desulphurization system comprising:

a flue gas source (12);
a reagent source (204);
a water source (52);
absorber means (202) for receiving the flue gas, the reagent and the water to cause an absorption of sulphur from the flue gas by the reagent within said absorber means (202); and
a digester reactor (210) for receiving spent reagent (208) from the absorber means (202) after the sulphur is absorbed from the flue gas by the reagent, the digester reactor (210) containing sulphur-reducing bacteria for regenerating the reagent, the regenerated reagent (224) being provided back into the absorber means (210) for further reaction with the flue gas (12); and
separator means (220) are provided for separating the product (212) produced in the digester reactor (210) into regenerated reagent (224) and organic solids (222);
characterised in that:
the reagent (204) is a calcium-based reagent; and
means are provided for returning the organic solids (222) to the digester reactor (210).

**8.** A system according to claim 7, further comprising means (238) for providing a nutrient source (228) to the digester reactor (210) to promote growth of the sulphur-reducing bacteria therein.

**9.** A system according to claim 7 or claim 8, further comprising gas collector means (214) operatively connected to the digester reactor (210) for collecting gases (216) produced by regeneration of the spent reagent (208) in the digester reactor (210).

**10.** A system according to claim 9, further comprising means (218) for processing said collected gas (216) produced by regeneration of the spent reagent (208) in the digester reactor (210) to form sulphur dioxide, sulphur, or sulphuric acid.

**11.** A system according to any one of claims 7 to 10, further comprising means for controlling conditions such as temperature (230), pH (232), nutrient content (236) and/or oxygen content (234) within the digester reactor (210) to promote bacterial growth therein.

**12.** A system according to any one of claims 7 to 11, wherein the sulphur-reducing bacteria within the digester reactor (210) are from the *Desulfovibrio* genus or the *Desulfotomaculum* genus.

## Patentansprüche

**1.** Rauchgasentschwefelungsverfahren mit biologischer Regenerierung, bei dem man:

Rauchgas (12), ein Reagenz (204) zur Umsetzung mit dem Rauchgas (12) und Wasser (52) einer Absorbereinrichtung (202) zuführt und dabei eine Absorption von Schwefel aus dem Rauchgas (12) durch das Reagenz (204) bewirkt,
verbrauchtes Reagenz (208) von der Absorbereinrichtung (202) zu einem Aufschlußreaktor (210) führt, der schwefelreduzierende Bakterien für die Regenerierung des Reagenz enthält, und
das regenerierte Reagenz (224) der Absorbereinrichtung (202) für weitere Umsetzung mit dem Rauchgas (12) zuführt,
dadurch gekennzeichnet, daß das Reagenz (204) ein Reagenz auf Calciumbasis ist und man die weiteren Stufen durchführt, in denen man
das in dem Aufschlußreaktor (210) erzeugte Produkt (212) in regeneriertes Reagenz (224) und organische Feststoffe (222) trennt, und
die organischen Feststoffe (222) zu dem Aufschlußreaktor (210) zurückführt.

2. Verfahren nach Anspruch 1 mit der zusätzlichen Stufe, in der man eine Nährstoffquelle (228) dem Aufschlußreaktor (210) zuführt, um das Wachstum der schwefelreduzierenden Bakterien darin zu fördern.

3. Verfahren nach Anspruch 1 oder Anspruch 2 mit der zusätzlichen Stufe, in der man durch Regenerierung des verbrauchten Reagenz (208) in dem Aufschlußreaktor (210) erzeugtes $H_2S$-Gas (216) sammelt.

4. Verfahren nach Anspruch 3 mit der zusätzlichen Stufe, in der man das durch Regenerieren des Reagenz (208) in dem Aufschlußreaktor (210) erzeugte, gesammelte $H_2S$-Gas (216) unter Bildung von Schwefeldioxid, Schwefel oder Schwefelsäure verarbeitet.

5. Verfahren nach einem der vorausgehenden Ansprüche mit der zusätzlichen Stufe, in der man die Bedingungen, wie die Temperatur (230), den pH-Wert (232), den Nährstoffgehalt (236) und/oder den Sauerstoffgehalt (234) in dem Aufschlußreaktor (210) steuert, um darin Bakterienwachstum zu fördern.

6. Verfahren nach einem der vorausgehenden Ansprüche, bei dem die schwefelreduzierenden Bakterien aus der Gattung Desulfovibrio oder aus der Gattung Desulfotomaculum stammen.

7. Rauchgasentschwefelungssystem mit biologischer Regenerierung mit:

einer Rauchgasquelle (12),
einer Reagenzquelle (204),
einer Wasserquelle (52),
einer Absorbereinrichtung (202) zur Aufnahme des Rauchgases, des Reagenz und des Wassers, um eine Absorption von Schwefel aus dem Rauchgas durch das Reagenz in der Absorbereinrichtung (202) zu bewirken, und
einem Aufschlußreaktor (210) zur Aufnahme von verbrauchtem Reagenz (208) aus der Absorbereinrichtung (202), nachdem der Schwefel aus dem Rauchgas durch das Reagenz absorbiert ist, wobei der Aufschlußreaktor (210) schwefelreduzierende Bakterien zur Regenerierung des Reagenz enthält und das regenerierte Reagenz (224) in die Absorbereinrichtung (210) zur weiteren Umsetzung mit dem Rauchgas (12) zurückgeführt wird, und
einer Trennvorrichtung (220) zur Trennung des in dem Aufschlußreaktor (210) erzeugten Produktes (212) in regeneriertes Reagenz (224) und organische Feststoffe (222),
dadurch gekennzeichnet, daß
das Reagenz (204) ein Reagenz auf Calciumbasis ist und
Einrichtungen zur Rückführung der organischen Feststoffe (222) zu dem Aufschlußreaktor (210) vorgesehen sind.

8. System nach Anspruch 7 weiterhin mit einer Einrichtung (238) zur Lieferung einer Nährstoffquelle (228) an den Aufschlußreaktor (210), um das Wachstum der schwefelreduzierenden Bakterien darin zu fördern.

9. System nach Anspruch 7 oder Anspruch 8 weiterhin mit einer Gassammlereinrichtung (214), die funktionsmäßig mit dem Aufschlußreaktor (210) zum Sammeln von Gasen (216) verbunden ist, welche durch Regenerierung des verbrauchten Reagenz (208) in dem Aufschlußreaktor (210) erzeugt werden.

10. System nach Anspruch 9 weiterhin mit einer Einrichtung (218) zur Verarbeitung des durch Regenerierung des verbrauchten Reagenz (208) in dem Aufschlußreaktor (210) erzeugten gesammelten Gases (216) unter Bildung von Schwefeldioxid, Schwefel oder Schwefelsäure.

11. System nach einem der Ansprüche 7 bis 10 weiterhin mit einer Einrichtung zur Steuerung von Bedingungen, wie der Temperatur (230), des pH-Wertes (232), des Nährstoffgehaltes (236) und/oder des Sauerstoffgehaltes (234) in dem Aufschlußreaktor (210), um darin Bakterienwachstum zu fördern.

12. System nach einem der Ansprüche 7 bis 11, in welchem die schwefelreduzierenden Bakterien in dem Aufschlußreaktor (210) aus der Gattung Desulfovibrio oder der Gattung Desulfotomaculum stammen.

**Revendications**

1. Procédé de désulfuration de gaz de fumée par biorégénération comprenant les phases consistant à :

   envoyer un gaz de fumée (12), un réactif (204) destiné à réagir avec le gaz de fumée (12) et de l'eau (52) jusqu'à un moyen absorbeur (202) afin d'entraîner une absorption du soufre du gaz de fumée (12) par le réactif (204) ;
   envoyer le réactif épuisé (208) provenant du moyen absorbeur (202) jusqu'à un réacteur digesteur (210) contenant des bactéries de réduction de soufre pour régénérer le réactif ; et
   envoyer le réactif régénéré (224) jusqu'au moyen absorbeur (202) pour une autre réaction avec le gaz de fumée (12) ;
   caractérisé en ce que le réactif (204) est un réactif à base de calcium, et par les phases supplémentaires consistant à :
   séparer le produit (212) obtenu dans le réacteur digesteur (210) en réactif régénéré (224) et solides organiques (222) ; et
   ramener les solides organiques (222) jusqu'au réacteur digesteur (210).

2. Procédé selon la revendication 1, comprenant en outre la phase consistant à envoyer une source nutritive (228) jusqu'au réacteur digesteur (210) afin de favoriser la croissance des bactéries de réduction de soufre en son sein.

3. Procédé selon la revendication 1 ou la revendication 2, comprenant en outre la phase consistant à récupérer du gaz $H_2S$ (216) produit par la régénération du réactif épuisé (208) dans le réacteur digesteur (210).

4. Procédé selon la revendication 3, comprenant en outre la phase consistant à traiter ledit gaz $H_2S$ récupéré (216), produit par la régénération du réactif (208) dans le réacteur digesteur (210), afin de former du dioxyde de soufre, du soufre, ou de l'acide sulfurique.

5. Procédé selon l'une quelconque des revendications précédentes, comprenant en outre la phase consistant à contrôler des conditions telles que la température (230), le pH (232), la teneur en substances nutritives (236) et/ou la teneur en oxygène (234) au sein du réacteur digesteur (210) afin de favoriser la croissance de bactéries en son sein.

6. Procédé selon l'une quelconque des revendications précédentes, dans lequel les bactéries de réduction de soufre sont de l'espèce *Desulfovibrio* ou de l'espèce *Desulfotomaculum*.

7. Système de désulfuration de gaz de fumée par biorégénération comprenant :

   une source de gaz de fumée (12) ;
   une source de réactif (204) ;
   une source d'eau (52) ;
   un moyen absorbeur (202) pour recevoir le gaz de fumée, le réactif et l'eau pour entraîner une absorption du soufre du gaz de fumée par le réactif au sein dudit moyen absorbeur (202) ; et
   un réacteur digesteur (210) pour recevoir le réactif épuisé (208) provenant du moyen absorbeur (202) une fois que le soufre est absorbé du gaz de fumée par le réactif, le réacteur digesteur (210) contenant des bactéries de réduction de soufre pour régénérer le réactif, le réactif régénéré (224) étant ramené jusqu'au moyen absorbeur (202) pour une autre réaction avec le gaz de fumée (12) ; et
   un moyen séparateur (220) est prévu pour séparer le produit (212) obtenu dans le réacteur digesteur (210) en réactif régénéré (224) et solides organiques (222) ;

caractérisé en ce que :

le réactif (204) est un réactif à base de calcium ;

et

un moyen est prévu pour ramener les solides organiques (222) jusqu'au réacteur digesteur (210).

**8.** Système selon la revendication 7, comprenant en outre un moyen (238) pour envoyer une source nutritive (228) jusqu'au réacteur digesteur (210) afin de favoriser la croissance des bactéries de réduction de soufre en son sein.

**9.** Système selon la revendication 7 ou la revendication 8, comprenant en outre un moyen de récupération de gaz (214) fonctionnellement couplé au réacteur digesteur (210) pour récupérer le gaz (216) produit par la régénération du réactif épuisé (208) dans le réacteur digesteur (210).

**10.** Système selon la revendication 9 comprenant en outre un moyen (218) pour traiter ledit gaz récupéré (216), produit par la régénération du réactif épuisé (208) dans le réacteur digesteur (210), afin de former du dioxyde de soufre, du soufre, ou de l'acide sulfurique.

**11.** Système selon l'une quelconque des revendications 7 à 10, comprenant en outre un moyen pour contrôler des conditions telles que la température (230), le pH (232), la teneur en substances nutritives (236) et/ou la teneur en oxygène (234) au sein du réacteur digesteur (210) afin de favoriser la croissance de bactéries en son sein.

**12.** Système selon l'une quelconque des revendications 7 à 11, dans lequel les bactéries de réduction de soufre au sein du réacteur digesteur (210) sont de l'espèce *Desulfovibrio* ou de l'espèce *Desulfotomaculum*.

FIG. I
PRIOR ART

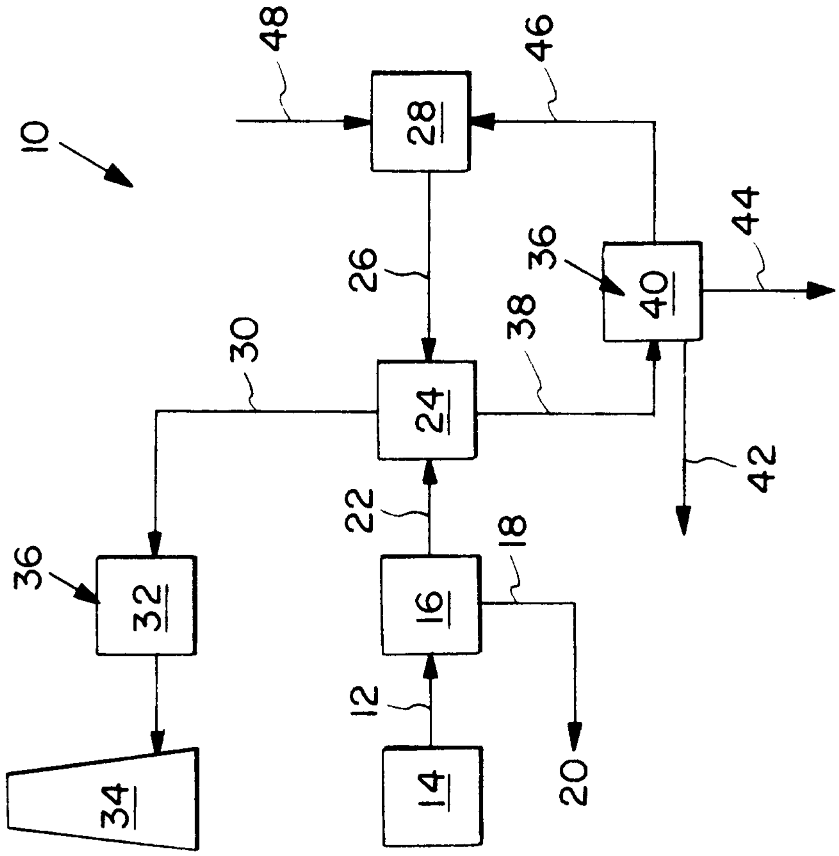

FIG. 2
PRIOR ART

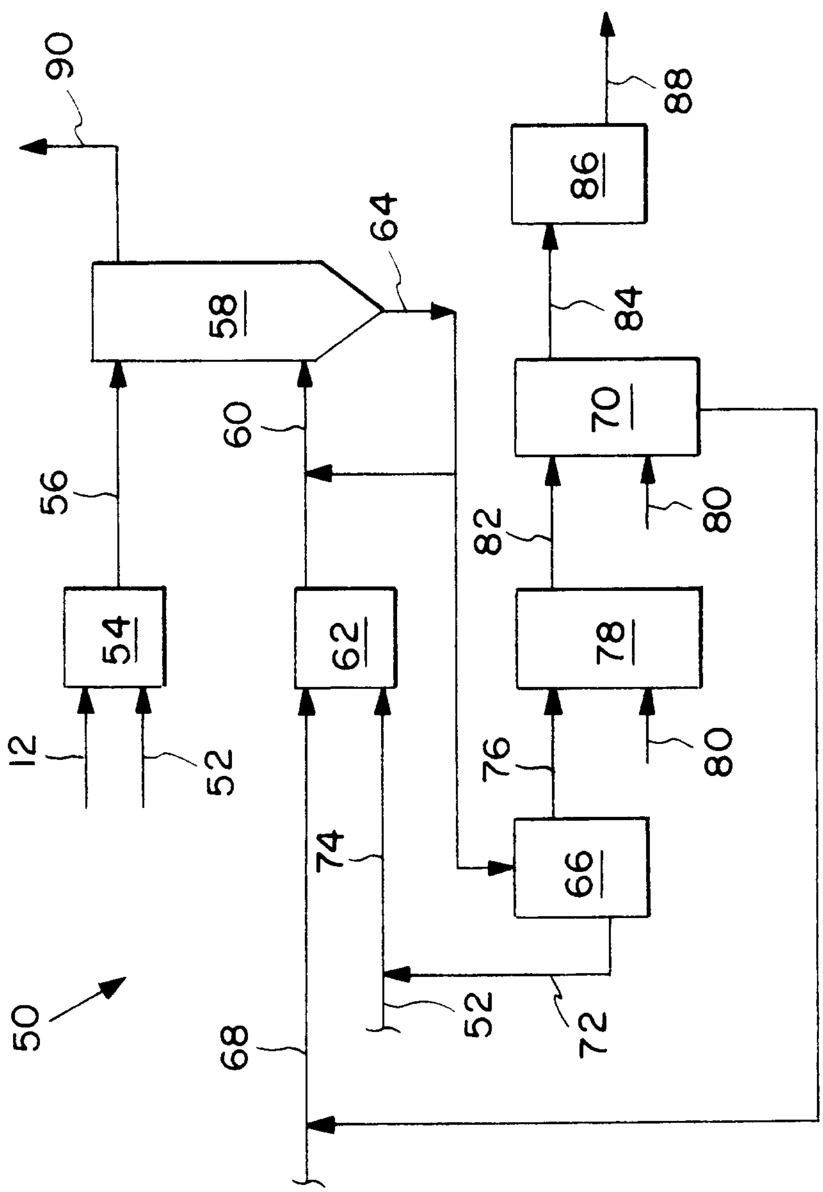

FIG. 3
PRIOR ART

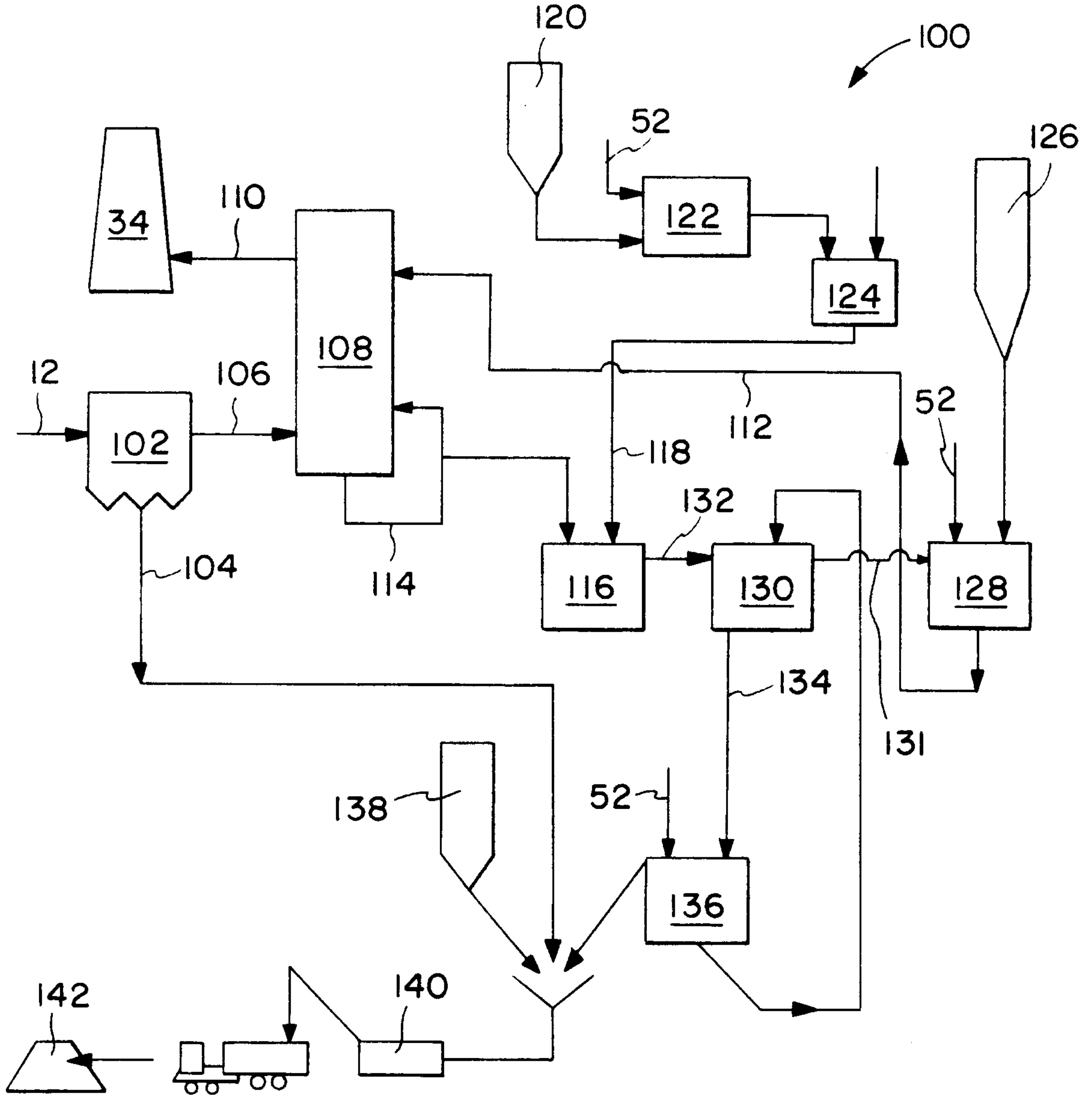

FIG. 4
PRIOR ART

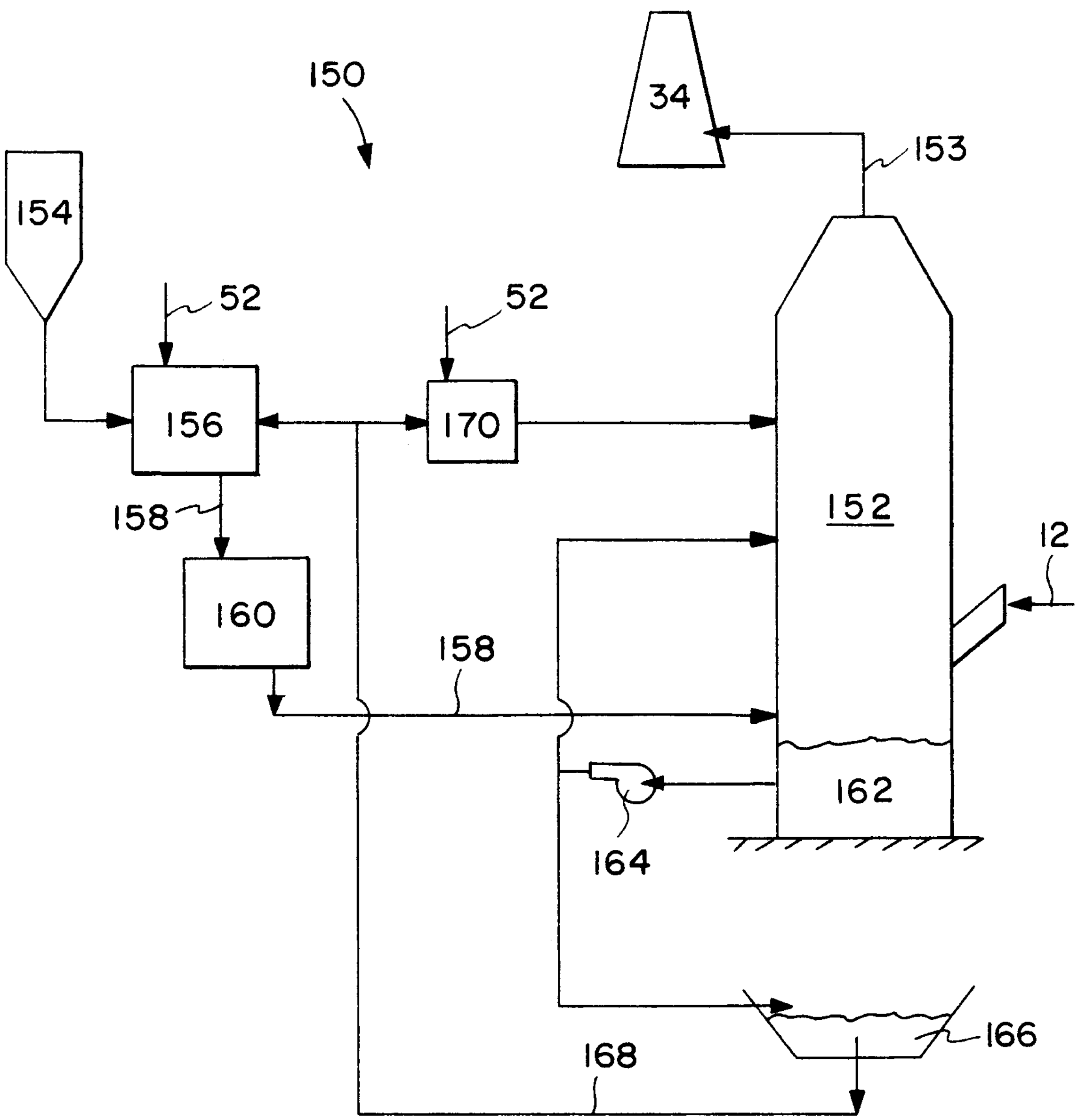

FIG. 5

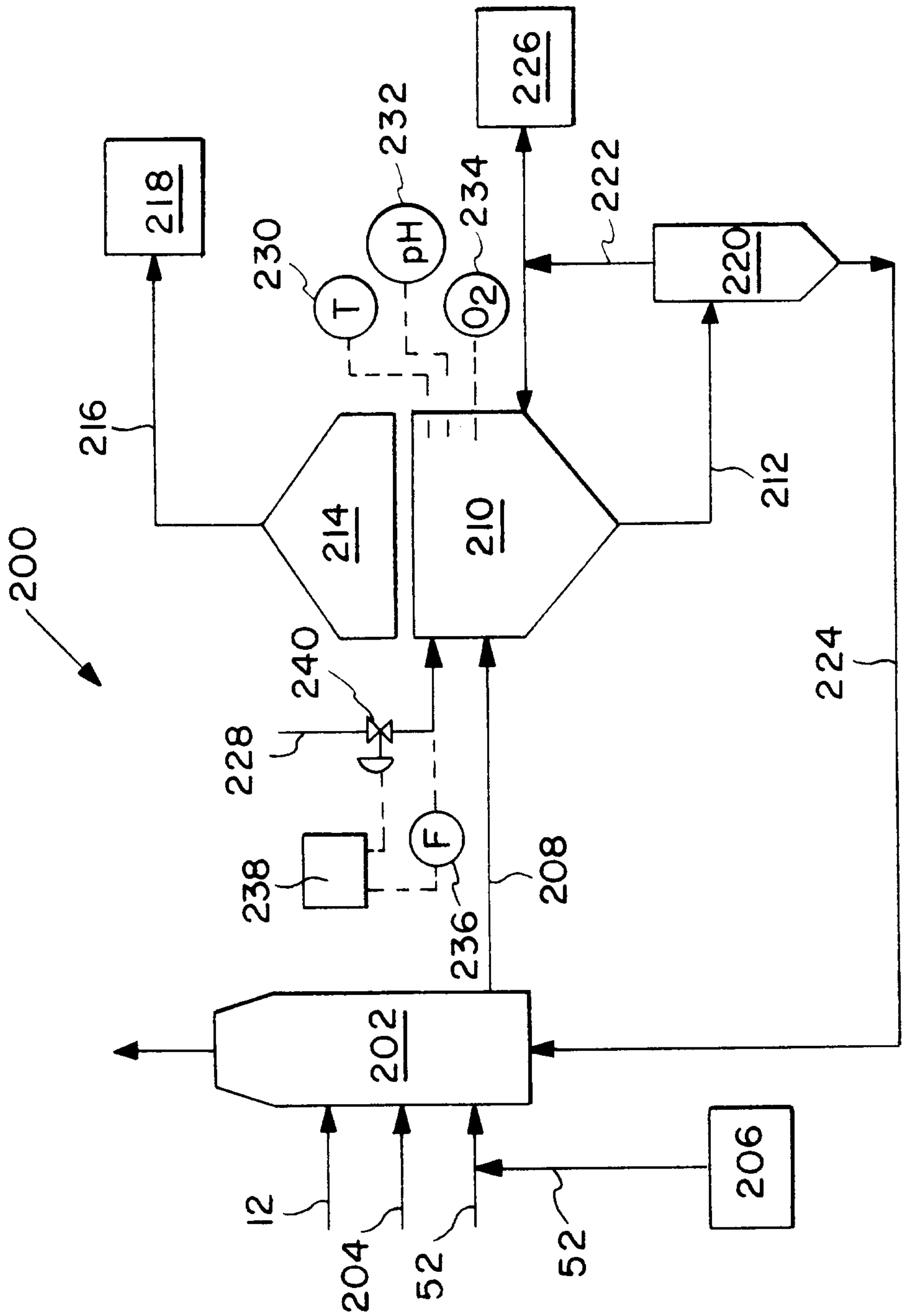

200
202
204
206
208
210
212
214
216
218
220
222
224
226
228
230
232
234
236
238
240
12
52
52
T
pH
O2
F